# DEMANDE DE BREVET EUROPEEN

(11) **EP 2 206 425 A1**
(43) Date de publication de la demande: **14.07.2010**
(21) Numéro de dépôt: 10150189.8
(22) Date de dépôt: 06.01.2010
(51) Int. Cl.: A01G 3/04, A01B 69/00

(54) **Dispositif formant taille-haie équipant un engin motorisé, tel qu'une tondeuse autoportée**

(30) Priorité: 07.01.2009 FR 0950067; 20.02.2009 FR 0951115
(71) Demandeur: COCHET S.A., 72130 Souge le Ganelon (FR)
(72) Inventeur: Cochet, Ludovic, 61250, DAMIGNY (FR)
(74) Mandataire: Thinat, Michel

(57) **Abrégé**

La présente invention concerne un dispositif formant taille-haie (1) équipant un engin motorisé, tel qu'une tondeuse autoportée.

Selon l'invention, le dispositif est **caractérisé en ce qu**'il comprend un cadre roulant (3) latéralement fixé à l'engin motorisé (2) par deux articulations (4, 5) situées respectivement en avant et en arrière de l'engin motorisé (2) suivant l'axe longitudinal (X-X') de l'engin (2) pour permettre un pivotement relatif du cadre roulant (3) et de l'engin (2) autour de cet axe, et un mât vertical (11) solidaire du cadre roulant (3) et portant à hauteur variable un taille-haie (12).

L'invention trouve application dans le domaine agricole.

## Description

La présente invention concerne un dispositif formant taille-haie équipant un engin motorisé, tel qu'un microtracteur ou une tondeuse autoportée.

L'entretien de haies par taillage est une opération souvent pénible surtout lorsque la longueur et l'épaisseur de haie à tailler deviennent importantes, obligeant l'opérateur à contrôler son taille-haie, aussi léger soit-il, à bout de bras et/ou dans des positions parfois traumatisantes pour les bras et le dos de l'opérateur.

Dans certaines situations, l'opérateur doit s'aider d'échelles et, le cas échéant, d'échafaudages, dont l'installation est souvent fastidieuse et rendant l'opération de taillage dangereuse lorsque l'opérateur est monté sur l'échelle ou l'échafaudage.

On a déjà cherché à équiper des engins motorisés, notamment des tracteurs professionnels, de dispositifs formant taille-haie. Cependant, de tels dispositifs sont d'une structure extrêmement complexe rendant difficile le montage et le démontage du dispositif formant taille-haie, sont coûteux et ne sont pas adaptés au taillage de haies de résidences principales ou secondaires.

La présente invention a pour but de pallier les inconvénients ci-dessus en proposant un dispositif formant taille-haie qui peut être monté facilement à un engin motorisé du commerce, tel qu'un microtracteur ou une tondeuse autoportée, et rendant l'opération de taillage de haie la plus agréable possible dans des conditions de sécurité optimales et qui est peu coûteux.

En outre, ces dispositifs demandent généralement une grande dextérité de manipulation pour que la taille de la haie soit régulière.

La présente invention a notamment pour but de remédier aux inconvénients de l'art antérieur.

A cet effet, selon l'invention, le dispositif formant taille-haie équipant un engin motorisé, tel qu'un microtracteur ou une tondeuse autoportée, est caractérisé en ce qu'il comprend un cadre roulant latéralement fixé à l'engin motorisé par deux articulations situées respectivement en avant et en arrière de l'engin motorisé suivant l'axe longitudinal de l'engin motorisé pour permettre un pivotement relatif du cadre roulant et de l'engin motorisé autour de cet axe et un mât vertical solidaire du cadre roulant portant à hauteur réglable un taille-haie.

De préférence, l'axe longitudinal de pivotement du cadre roulant passe par le centre de gravité de l'engin motorisé.

Avantageusement, le cadre roulant comprend une roue folle unique supportant le poids du cadre et dont l'axe vertical de pivotement est disposé coaxialement au mât vertical.

Le mât vertical est fixé au cadre roulant en un emplacement déporté et en avant de l'engin motorisé et le taille-haie est fixé au mât vertical en occupant une position sensiblement dans l'axe des roues avant de l'engin motorisé.

De préférence, le cadre roulant comprend deux bras rigides sensiblement transversaux à l'axe longitudinal de l'axe motorisé et solidaires d'un même côté d'une barre sensiblement parallèle à cet axe longitudinal, les deux bras étant amoviblement fixés en avant et en arrière de l'engin motorisé respectivement par deux articulations à rotules.

Les deux articulations à rotules peuvent comprendre deux boules d'attelage dont l'une est fixée à la partie de châssis avant de l'engin motorisé et l'autre est fixée à la partie arrière de ce châssis par l'intermédiaire d'une structure de support destinée à la fixation d'un bac de ramassage de déchets lorsque l'engin motorisé est une tondeuse autoportée.

Avantageusement, le mât a son extrémité inférieure fixée pivotante au cadre roulant par une chape d'axe de pivotement sensiblement parallèle à l'axe longitudinal de l'engin motorisé et un organe de commande de pivotement du mât, tel qu'un vérin électrique, est monté entre le mât et le cadre roulant et dont le fonctionnement est asservi à un signal fourni par un capteur de dévers fixé au mât pour maintenir ce dernier à sa position verticale.

Le taille-haie est amoviblement fixé à l'extrémité d'un bras horizontal à déplacement commandé et guidé le long du mât pour positionner le taille-haie à une hauteur de travail déterminée et peut être réglé à une position angulaire relativement au bras horizontal pour occuper une position de travail choisie entre celle à laquelle la lame de coupe du taille-haie est verticale, et celle où elle est horizontale.

Les moyens de commande du déplacement guidé du bras horizontal le long du mât comprennent un treuil mécanique fixé au cadre roulant, une navette ou un chariot auquel est fixé le bras horizontal, monté coulissant relativement au mât et qui est relié au treuil par un ensemble à câble et poulies pour permettre au treuil, actionné par le conducteur de l'engin motorisé, de déplacer le chariot à une hauteur déterminée relativement au mât.

Le mât comprend deux parties pouvant coulisser télescopiquement l'une dans l'autre sous la commande du treuil mécanique, la navette de support du bras horizontal étant montée à coulissement relativement à la partie interne du mât télescopique.

Le dispositif comprend en outre des moyens permettant de contrôler la trajectoire du taille-haie suivant un plan vertical pour obtenir un taillage de haie rectiligne et comprenant un câble de référence préalablement tendu suivant la trajectoire à faire suivre au taille-haie suivant le plan vertical, un capteur de position fixé au mât à proximité du câble tendu au même niveau que celui-ci et apte à fournir un signal représentatif de la distance le séparant de ce câble, un actionneur, tel qu'un vérin électrique, fixé entre les deux parties coulissant télescopiquement l'une dans l'autre du bras avant et un moyen d'asservissement de l'actionneur en fonction du signal fourni par le capteur de position pour déplacer l'une des parties relativement à l'autre du bras télescopique avant afin de maintenir constante la distance séparant le mât du câble.

Suivant une variante de réalisation, le dispositif comprend en outre des moyens permettant de contrôler la trajectoire du taille-haie suivant un plan horizontal pour obtenir un taillage de haie rectiligne et comprenant un câble préalablement tendu suivant la trajectoire à faire suivre au taille-haie suivant le plan horizontal, un capteur de position fixé au mât à proximité du câble tendu en aplomb de celui-ci et apte à fournir un signal représentatif de la distance le séparant de ce câble, un actionneur, tel qu'un vérin électrique, fixé en série dans le câble de déplacement de la navette ou du chariot, et un moyen d'asservissement de l'actionneur en fonction du signal fourni par le capteur de position pour déplacer la navette ou le chariot relativement au mât de façon à maintenir à hauteur constante dans le plan horizontal la lame de coupe du taille-haie.

Avantageusement, le capteur de position est constitué par un ensemble à palpeur contactant le câble de référence et à potentiomètre fournissant un signal électrique d'asservissement de l'actionneur.

Suivant une variante de réalisation, le dispositif comprend en outre une pluralité de roues supportant le poids du cadre roulant en étant montées folles sur une structure interposée entre les roues folles et le cadre roulant de manière à adapter la position en hauteur des roues folles d'une part pour qu'elles roulent en restant au contact du sol même lorsque le sol présente des inégalités et d'autre part pour lisser les débattements verticaux du mât vertical résultant desdites inégalités, le mât vertical étant un support du taille-haie, solidaire du cadre roulant et pouvant porter à hauteur réglable le taille-haie.

Dans cette variante de réalisation, la structure adaptant la position des roues en hauteur peut comprendre un système de balancier pivotant par rapport au cadre roulant suivant un axe sensiblement horizontal et s'étendant sensiblement perpendiculairement à l'axe longitudinal X-X'.

Avantageusement, le système de balancier comporte au moins un balancier terminal ayant l'une des roues folles à chacune de ses extrémités et ayant un pivot d'axe sensiblement horizontal sensiblement à mi longueur, de manière à autoriser le pivotement du balancier terminal par rapport au cadre roulant.

Avantageusement, le système de balancier comporte un balancier intermédiaire qui est interposé entre le cadre roulant et le balancier terminal, qui a un pivot d'axe sensiblement horizontal articulé au cadre roulant, ledit pivot étant à une distance de l'une des extrémités du balancier intermédiaire comprise entre un quart et la moitié de la longueur du balancier intermédiaire, et auquel le balancier terminal est articulé par pivot à l'une de ses extrémités.

Avantageusement, le balancier intermédiaire est équipé de l'une des roues folles à son extrémité opposée à celle à laquelle le balancier terminal est articulé par pivot.

Avantageusement, le balancier intermédiaire comporte un corps arqué vers le bas et ayant son pivot d'articulation au cadre à son extrémité supérieure.

Avantageusement, le balancier terminal comporte un corps globalement en T ayant l'une des roues montées folles à chacune de ses extrémités supérieures et dont l'extrémité inférieure est articulée par pivot au balancier intermédiaire.

Avantageusement, chacun des balanciers comporte deux flasques reliés entre eux et s'étendant sensiblement verticalement et parallèlement à l'axe longitudinal (X-X'), le balancier terminal étant monté articulé par pivot entre les flasques du balancier intermédiaire.

Avantageusement, un patin de protection de taille-haie est relié au mât vertical de support du taille-haie pour être situé sous la lame du taille-haie lorsque la lame est dressée verticalement vers le haut, le patin présentant un profil sensiblement en C qui permet d'une part de recevoir en son centre le taille-haie pour le protéger et d'autre part de stabiliser l'appui du patin sur la haie à tailler.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant deux modes de réalisation de l'invention et dans lesquels :
- la figure 1 est une vue en perspective avant d'un ensemble à engin motorisé et dispositif formant taille-haie conforme à l'invention ;
- la figure 2 est une vue arrière de l'ensemble de la figure 1 ;
- les figures 3 et 4 sont des vues de face de l'ensemble de la figure 1 où l'engin motorisé occupe deux positions différentes en dévers ;
- la figure 5 est une vue en perspective suivant la flèche V de la figure 1 et représentant une variante de réalisation du mât du dispositif formant taille-haie ;
- la figure 6 est une vue agrandie partiellement éclatée du dispositif formant taille-haie de la figure 5 ;
- la figure 7 est une vue en élévation du mât du dispositif des figures 5 et 6 ;
- la figure 8 est une vue en section suivant la ligne VIII-VIII de la figure 7 ;
- la figure 9 représente l'ensemble de la figure 1 pourvu d'un dispositif permettant de contrôler la trajectoire rectiligne suivant un plan vertical du taille-haie ; et
- les figures 10 et 11 représentent deux modes de contrôle de la trajectoire rectiligne du taille-haie en position verticale lorsque l'ensemble de l'invention s'écarte d'une trajectoire de référence.
- la figure 12 est une vue en perspective avant d'un autre ensemble à engin motorisé et dispositif formant taille-haie conforme à l'invention ;
- la figure 13 est une vue en perspective arrière de l'autre ensemble à engin motorisé et dispositif formant taille-haie conforme à l'invention ;
- les figures 14 et 15 sont des vues de face de l'ensemble de la figure 12 où l'engin motorisé occupe deux positions différentes en dévers ;
- la figure 16 est un dessin technique illustrant une vue agrandie de côté d'une structure porteuse de roues de l'ensemble des figures 12 et 13.

Le dispositif formant taille-haie 1 de l'invention va être décrit comme équipant une tondeuse autoportée 2, mais il est bien entendu qu'il peut s'appliquer à tout autre engin motorisé, tel que par exemple un microtracteur.

Le dispositif formant taille-haie 1 comprend un cadre roulant 3 latéralement fixé à la tondeuse autoportée 2 par deux articulations 4 et 5 situées respectivement en avant et en arrière de la tondeuse 2 suivant sensiblement l'axe longitudinal X-X' de cette dernière pour permettre un pivotement du cadre 3 autour de cet axe lors des déplacements de la tondeuse 2.

Le cadre 3 est de préférence constitué par deux bras rigides 6, 7 sensiblement transversaux à l'axe longitudinal X-X' de la tondeuse 2 et solidaires à deux de leurs extrémités, situées d'un même côté, d'une barre rigide 8 sensiblement parallèle à l'axe longitudinal X-X'.

Le bras avant 6 a son extrémité opposée à la barre 8 fixée, par l'articulation avant 4 du type à rotule, à une structure d'attelage 9 solidaire de la partie avant du châssis de la tondeuse 2. De même, le bras arrière 7 a son extrémité opposée à la barre 8 fixée, par l'articulation arrière 5 du type à rotule, à une structure d'attelage 10 solidaire de la partie arrière du châssis de la tondeuse 2.

Les deux articulations à rotules 4, 5 peuvent être constituées par celles à boules utilisées couramment dans les dispositifs d'attelage de caravanes à des véhicules automobiles, c'est-à-dire que de telles articulations à rotules permettent un montage et démontage extrêmement simples et rapides du cadre 3 respectivement à la tondeuse 2 et de cette tondeuse. Ainsi, la boule constituant l'articulation avant 4 est solidaire de l'attelage avant fixe 9 tandis que la boule de l'articulation arrière est solidaire de l'attelage arrière 10 qui peut être constitué par le cadre de fixation du bac de ramassage de déchets de la tondeuse 2, permettant à cette dernière de revenir à son fonction de tonte une fois le dispositif formant taille-haie 1 retiré de la tondeuse 2.

De préférence, l'axe longitudinal d'articulation du cadre 3 relativement à la tondeuse 2 passe par le centre de gravité de cette tondeuse.

Ce dispositif formant taille-haie 1 comprend en outre un mât vertical 11 dont l'extrémité inférieure est fixée au cadre 3 et portant à hauteur réglable le taille-haie 12, le mât 11 ayant une hauteur suffisante pour atteindre les hauteurs de coupe souhaitées de haies à tailler.

L'extrémité inférieure du mât 11 est fixée au voisinage de l'angle de liaison entre le bras avant 6 et la barre longitudinale 8 du cadre 3 par l'intermédiaire d'une chape 13 solidaire de la barre 8 et dans laquelle peut pivoter le mât autour d'un axe sensiblement parallèle à l'axe longitudinal X-X' de la tondeuse 2.

En disposant la barre 8 du cadre 3 à une certaine distance de la tondeuse 2, on augmente le polygone de sustentation du taille-haie 12 dont le montant vertical de support est disposé en avant de la tondeuse 2 et déporté de cette dernière. De la sorte, le taille-haie 12 est lui-même situé complètement en avant de la tondeuse 2, position extrêmement avantageuse au conducteur de la tondeuse 2 puisque le taille-haie est placé entre son champ de vision et l'axe de la haie pour permettre une visée naturelle et par conséquent un bon maintien du cap de la tondeuse 2. Cette position permet non seulement un bon confort du conducteur mais également de surveiller la lame de coupe 14 du taille-haie 12 et de réagir rapidement en cas de dysfonctionnement du taille-haie 12.

Avantageusement, le taille-haie 12 est fixé au mât 11 de façon que son plan médian longitudinal vertical soit disposé sensiblement dans l'axe des roues avant de la tondeuse 2. Cette position particulière du taille-haie 12 permet aux corrections de trajectoire de la tondeuse 2 d'être immédiatement transmises au taille-haie, ce qui permet d'améliorer la qualité de coupe.

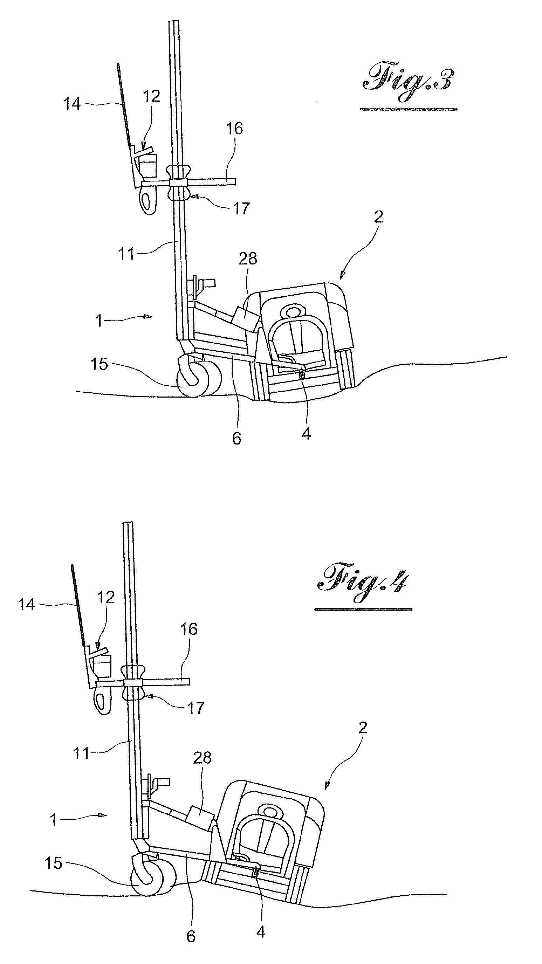

Le fait de relier le cadre 3 en deux points de liaison 4, 5 en avant et en arrière 5 de la tondeuse 2 assure une bonne rigidité de l'ensemble, garantit un bon report de la trajectoire de la tondeuse sur celle du taille-haie et indispensable pour maintenir une coupe régulière. En réalisant en outre un axe d'articulation sans jeu du cadre 3 le plus proche possible du centre de gravité de la tondeuse 2, les irrégularités de terrains dues aux bosses et creux de ceux-ci et qui font tanguer la tondeuse à droite et à gauche comme représenté aux figures 3 et 4, n'ont que très peu d'influence sur le maintien en verticalité du mât 11.

Le cadre 3 comprend une seule et unique roue 15 montée folle et dont l'axe vertical de pivotement est de préférence coaxial au montant vertical 11 de façon que la roue pivotante 15 supporte non seulement le poids du mât 11 et du taille-haie 12, mais également le couple engendré par le déport du taille-haie 12 relativement à la tondeuse 2 soit réduit.

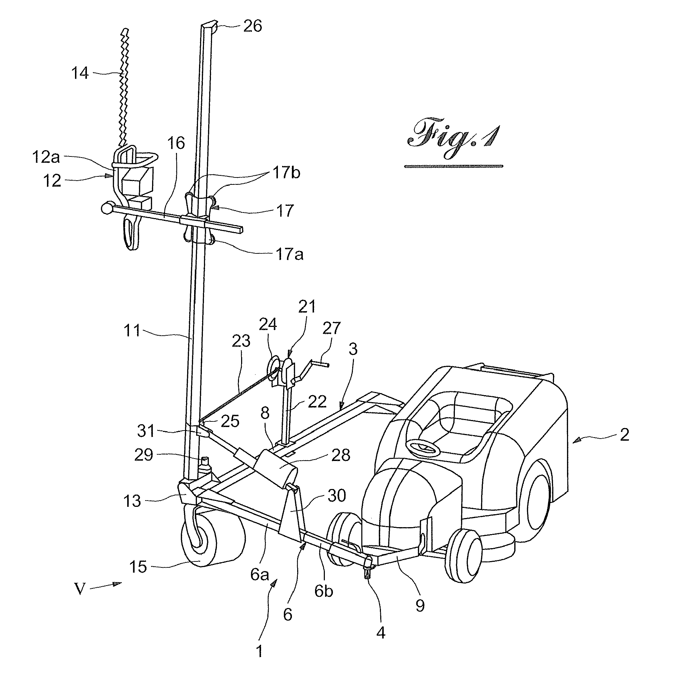

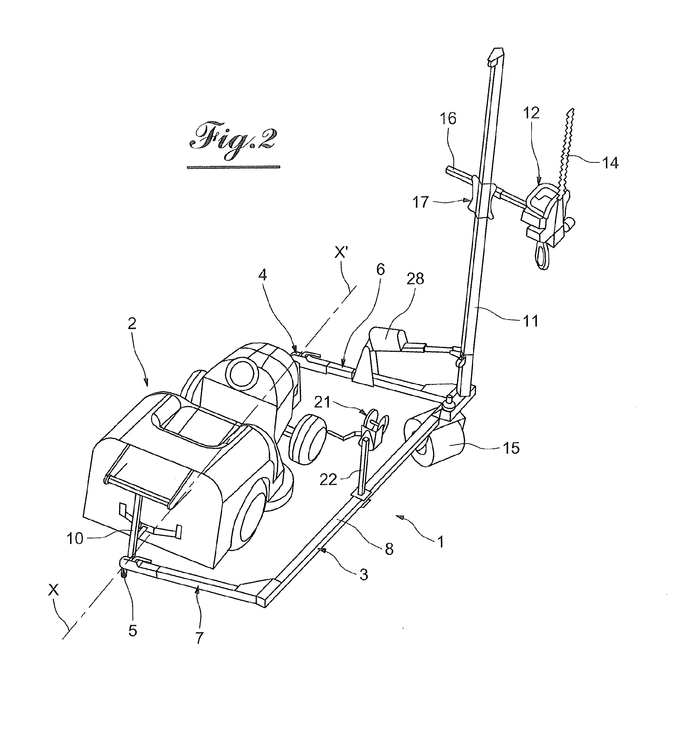

Le taille-haie 12 est amoviblement fixé à l'extrémité d'un bras de support 16 solidaire du mât 11 transversalement à ce dernier par l'intermédiaire d'un chariot 17 à déplacement commandé et guidé le long du mât 11 de façon à occuper une hauteur souhaitée de coupe du taille-haie, comme cela ressort du mode de réalisation du mât simple 11 représenté aux figures 1 à 4.

A cet effet, le taille-haie 12 est amoviblement fixé par son cadre 12a à une plaque de support 18 solidaire d'un axe rigide horizontal 19 amoviblement fixé transversalement à l'extrémité du bras horizontal de support 16 déporté au-delà du plan vertical passant par le mât 11 et le bras 8 à l'opposé de la tondeuse 2. En outre, l'axe rigide 19 peut s'engager dans un tube conjugué 18a, par exemple de section carrée, solidaire de la plaque 18 et au moins une vis permet de bloquer axialement le tube 18a à l'axe 19. La liaison entre l'axe 19 de support du taille-haie 12 et le bras 16 est du type à pivot permettant un réglage d'inclinaison du taille-haie 12 entre une position à laquelle la lame de coupe 14 est verticale et une position à laquelle cette lame est horizontale pour respectivement tailler les haies latéralement et en hauteur. Cette liaison pivotante, schématisée en 20, peut comporter un blocage manuel du taille-haie 12 à une position angulaire souhaitée de travail. A titre d'exemple, la liaison pivotante 20 peut être du type à double tronc de cône, un tronc de cône mâle solidaire de l'axe 19 et un tronc de cône femelle solidaire de l'extrémité du bras horizontal, une vis de blocage à poignée de manoeuvre traversant le tronc de cône femelle en étant ancrée à travers le tronc de cône mâle pour coincer ce dernier dans le tronc de cône femelle à la position angulaire souhaitée du taille-haie 12. Une fois démonté de sa plaque de support 18, le taille-haie 12 peut être utilisé de façon traditionnelle, notamment pour des travaux de finition des parties de haie non accessibles par le dispositif 1.

Le bras horizontal 16 peut être fixé au chariot coulissant 17 en étant réglable en position relativement à ce dernier et transversalement à l'axer X-X' de façon à déporter le taille-haie 12 à une distance voulue relativement au mât 11.

Les moyens de commande du déplacement du chariot 17 le long du mât 11 comprennent un treuil 21 amoviblement fixé sur la barre longitudinale 8 du cadre 3 par l'intermédiaire d'un montant 22, et un câble 23 enroulé autour de la poulie 24 du treuil 21. Le câble 23 sort de la poulie 24 pour s'enrouler sur une poulie de renvoi 25 solidaire de la partie d'extrémité inférieure du mât 11, s'étend le long de ce mât jusqu'à son extrémité supérieure en passant sur une poulie de renvoi 26 solidaire de cette extrémité, pour redescendre ensuite en étant ancré par son extrémité au chariot 17 qui est ainsi suspendu au câble 23 à coulissement guidé le long du mât 11.

Ainsi, en manoeuvrant le treuil 21 par sa manivelle 27, le câble 23 peut être enroulé sur la poulie 24 ou déroulé de celle-ci pour déplacer le chariot 17 le long du mât 11 et le régler à une hauteur souhaitée relativement au mât.

Le chariot 17 peut être constitué par deux demi-coquilles 17a enserrant le mât 11 et entre lesquelles sont montées à rotation deux paires de roues 17b disposées respectivement de part et d'autre du mât 11 en contact avec ce dernier pour permettre au chariot 17 de rouler le long du mât 11.

Des moyens sont prévus pour maintenir le mât 11 à sa position verticale en cas de dévers du cadre 3 lorsque l'ensemble à dispositif 1 et tondeuse 2 se déplace sur des terrains accidentés. Ces moyens comprennent un actionneur 28, tel qu'un vérin électrique, monté entre le mât 11 et le bras avant 6 du cadre 3 et dont l'actionnement est asservi par un capteur de dévers 29, tel qu'un inclinomètre, fixé au montant 11, de préférence en partie inférieure de celui-ci. Dans le cas d'un vérin électrique, le corps de ce vérin est fixé, par une chape 30, au bras avant 6 et sa tige est fixée par une chape 31 au montant 11. Avantageusement, le bras avant 6 est constitué de deux parties 6a, 6b pouvant coulisser télescopiquement l'une dans l'autre comme on le verra ultérieurement, la chape 30 de support du corps du vérin 28 étant solidaire du bras externe 6a de l'une des parties télescopiques, ce bras étant celui solidarisé à la barre 8.

Ainsi, en cas de dévers du cadre 3 relativement à la tondeuse 2, le capteur 29 fournit un signal électrique à un bloc électronique d'asservissement, non représenté, commandant l'actionneur 28 de façon qu'il fasse pivoter le mât 11 autour de son axe d'articulation sensiblement parallèle à l'axe longitudinal X-X' pour maintenir le mât 11 à sa position verticale comme représenté aux figures 3 et 4.

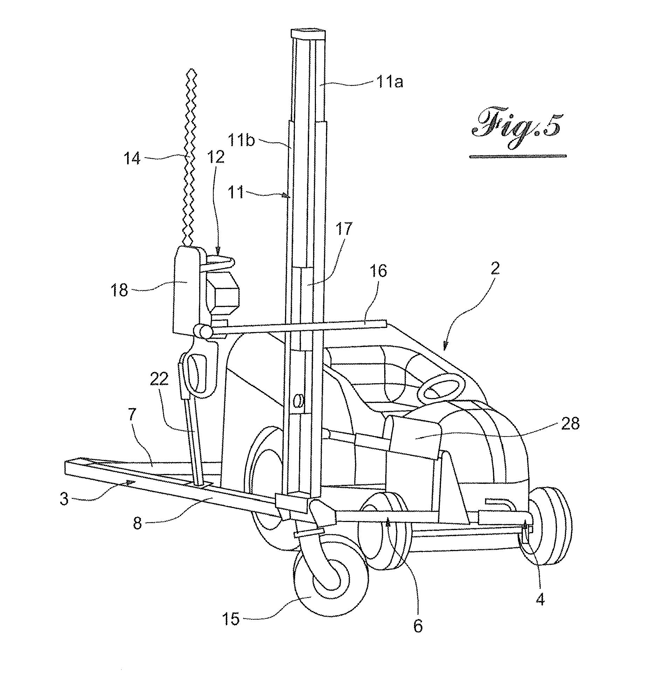

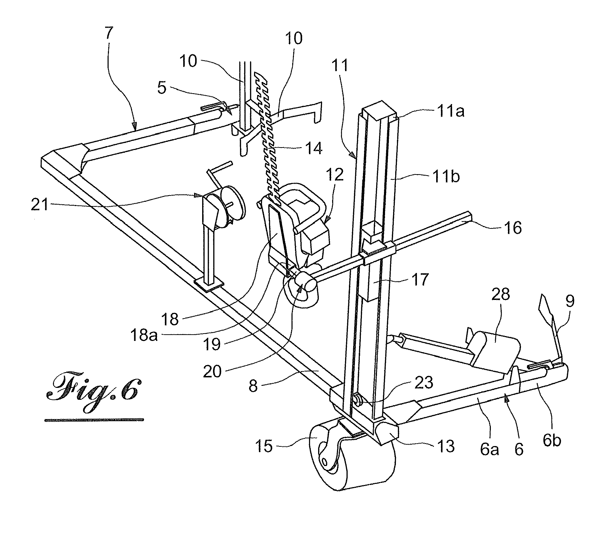

Selon un autre mode de réalisation, au lieu d'être un mât simple comme représenté aux figures 1 à 4, le mât 11 peut comporter, comme représenté aux figures 5 à 8, deux parties 11a, 11b pouvant coulisser télescopiquement l'une dans l'autre entre une position de hauteur basse à laquelle la partie interne 11a du mât est complètement logée dans la partie externe 11b pour assurer un encombrement réduit en hauteur du mât 11 et le loger dans un espace de rangement et une position haute à laquelle la partie interne 11a est complètement sortie de la partie externe 11b pour une hauteur maximale de travail du taille-haie.

Les deux parties 11a, 11b sont constituées par deux profilés conjugués ouverts par exemple à section transversale à cornière dont les ailes ont leurs bords libres recourbés à angle droit. Le coulissement commandé de la partie interne 11a dans la partie externe 11b du mât 11 est réalisé par le treuil 21 de structure identique au treuil 21 du mode de réalisation précédent et un jeu de câbles et de poulies 25, 26, 27 et 28 commandant également le déplacement d'une navette 17 dans le profilé de la partie interne 11a le long de celui-ci pour régler la position en hauteur du taille-haie 12 relativement au mât 11.

Plus précisément, le câble 23 provenant du treuil mécanique 21 passe par une poulie de renvoi inférieure 27 solidaire de la partie fixe 11b du mât 11 en bas de celui-ci, longe sensiblement la partie externe fixe 11b pour s'enrouler sur une poulie de renvoi 26 solidaire de l'extrémité supérieure de la partie fixe 11b du mât 11. Le câble 23 descend ensuite de la poulie 26 dans l'espace E défini entre les deux âmes en regard l'une de l'autre respectivement des parties fixe 11b et mobile 11a du mât 11 pour s'enrouler à nouveau sur un câble de renvoi 27 solidaire de l'extrémité inférieure de la partie mobile 11a de ce mât. Le câble 23 sort de la poulie de renvoi 27 pour s'étendre au travers de la partie mobile 11a du mât 11 et le corps creux de la navette 17 constitué sous la forme d'un parallélépipède rectangle monté à coulissement guidé dans le profilé de la partie mobile 11a. Le câble 23 est enroulé sur une poulie de renvoi supérieure 28 solidaire de l'extrémité supérieure de la partie mobile 11a du mât 11 par l'intermédiaire d'un capuchon 11e coiffant cette extrémité supérieure en étant solidarisé à celle-ci. L'extrémité du câble 23 sortant de la poulie de renvoi 28 est fixée en partie supérieure de la navette mobile 17.

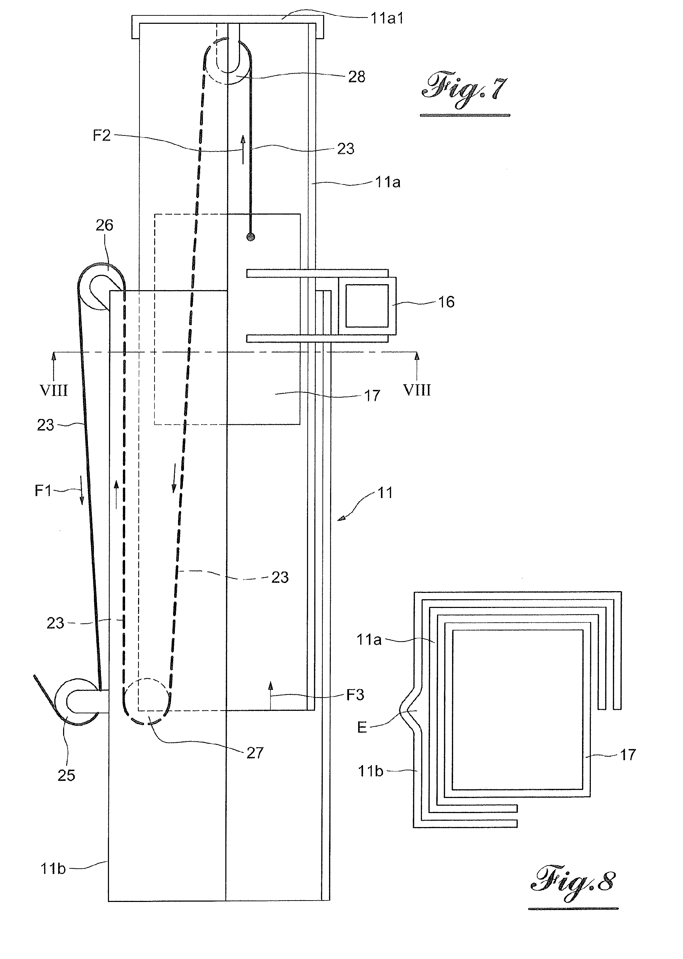

Ainsi, lorsqu'on exerce une traction vers le bas sur la partie externe du câble 23 à partir du treuil 21 comme représenté par la flèche F1 en figure 7, on exerce tout d'abord sur la navette 17 par la partie de câble correspondant 23 sortant de la poulie de renvoi 28 une force ascendante F2 qui déplace vers le haut la navette 17 relativement à la partie interne 11a du mât 11 jusqu'à ce que la navette 17 vienne en butée sur la poulie 28. Ensuite, en continuant d'exercer la force F1 sur le câble 23, la partie mobile 11a du mât 11 coulisse de façon guidée vers le haut relativement à la partie fixe 11b comme indiqué par la flèche F3 jusqu'à une hauteur déterminée correspondant à la hauteur de coupe souhaitée du taille-haie 12. Pour déplacer successivement en sens inverse aux flèches F2 et F3 la partie mobile 11a du mât 11 et la navette 17 dans le but d'amener le mât télescopique en position relative basse, il suffit de relâcher la tension sur le câble 23 par le treuil 21 dans le sens opposé à la force F1 de la figure 7.

Le taille-haie 12 est fixé à pivotement au bras horizontal 13 solidaire du chariot 17 de la même manière que dans le mode de réalisation précédent.

Le dispositif formant taille-haie 1 est également pourvu de moyens permettant de contrôler la trajectoire du taille-haie 12 suivant un plan vertical lorsque la lame de coupe 14 du taille-haie est verticale pour effectuer une taille de côté d'une haie ou suivant un plan horizontal lorsque la lame de coupe 14 occupe une position de travail horizontale de taillage en hauteur de la haie, de façon à obtenir un taillage de haie le plus rectiligne possible.

Ces moyens comprennent un câble 32, par exemple en nylon, préalablement tendu suivant la trajectoire à faire suivre au taille-haie 12 dans le plan vertical ou dans le plan horizontal et un capteur de position 33 fixé au mât 11 à proximité du câble de référence 32. Le capteur 33 peut être constitué par un palpeur en forme de T dont la tige transversale est en contact avec le câble 32 pendant l'opération de taillage de la haie. La tige longitudinale 33b du palpeur 33 est mécaniquement reliée à un potentiomètre 34 dont la valeur de résistance varie en fonction de la position du palpeur par rapport au câble de référence 32 de façon à fournir un signal de sortie représentatif de cette position relative. La tige transversale 33a du palpeur 33 est soit verticalement en contact avec le câble de référence 32 lorsque l'on souhaite une taille rectiligne d'un côté de haie avec la lame de coupe 14 du taille-haie 12 verticale, soit en contact horizontal sur le câble de référence 32 lorsque l'on souhaite un taillage en hauteur de la haie avec la lame de coupe 14 du taille-haie 12 occupant sa position horizontale correspondante.

Lorsque la tige transversale 33a du palpeur 33 est verticalement en contact avec le câble 32, la tige longitudinale 33b est fixée pivotante au mât 11 suivant un axe vertical pour commander le potentiomètre solidaire également du mât 11.

Lorsque la tige transversale 33a du palpeur 33 est horizontalement en contact sur le câble 32, la tige longitudinale 33b est fixée pivotante au mât 11 suivant un axe horizontal pour déplacer et commander le potentiomètre solidaire du bras 11.

En outre, quelle que soit la configuration de montage du palpeur relativement au câble de référence 32, la tige transversale est maintenue constamment en contact d'appui sur le câble 32 par un ressort de rappel, non représenté.

En fait, le palpeur 33, le potentiomètre et le ressort constituent un même ensemble logé dans un boîtier pouvant être amoviblement fixé à l'emplacement approprié du mât 11 avec la tige longitudinale 33b du palpeur montée pivotante dans ce boîtier. Pour passer d'une configuration à l'autre de montage du palpeur relativement au câble de référence 32, il suffit de fixer cet ensemble à l'emplacement correspondant du mât 11.

Dans le cas du déplacement vertical de la lame de coupe 14, un actionneur 35, tel que par exemple un vérin électrique, est amoviblement monté entre le bras fixe 6a du bras avant 6 du cadre 3 et le bras 6b monté coulissant télescopiquement dans le bras 6a de façon que l'actionneur 35 puisse déplacer longitudinalement le bras 6b relativement au bras 6a pour varier la longueur ou déport du bras 6 relativement à la tondeuse 2.

La sortie du capteur de position 33 est reliée à un circuit d'asservissement, non représenté, pouvant être monté sur le cadre 3 et qui est relié à l'actionneur 35 de façon à actionner ce dernier pour assurer une distance pratiquement constante entre le mât 11 et le câble de référence 32 en cas de variation de cette distance détectée par le capteur 33 pendant le déplacement du dispositif formant taille-haie 1 de la tondeuse 2 pour tailler la haie.

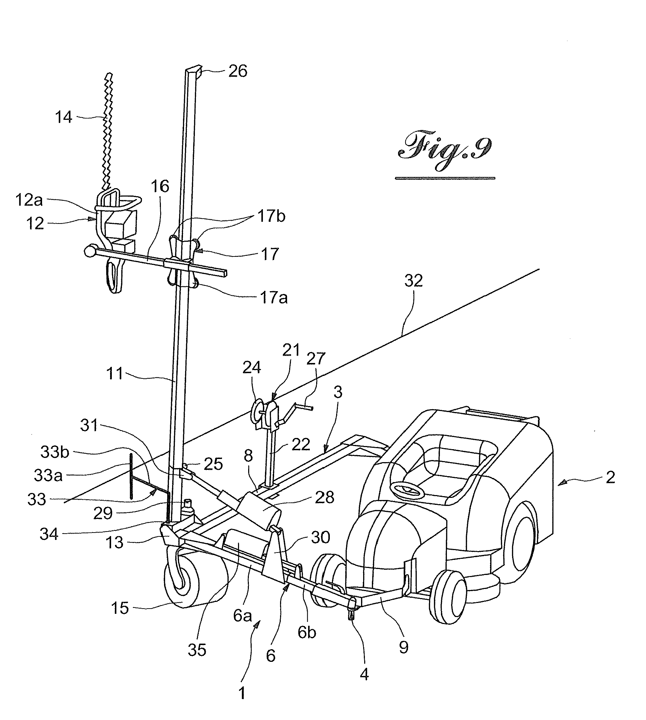

A la position verticale de la lame de coupe 14 du taille-haie 12 pour tailler le côté d'une haie comme représenté aux figures 7 à 9, lorsque la tondeuse 2 se déplace pour l'opération de taillage, le palpeur 33 détecte toute variation de distance entre le mât 11 et le câble de référence 12 pour fournir un signal correspondant au circuit d'asservissement qui commande l'actionneur 35 de façon qu'il déplace le bras télescopiquement coulissant 6b relativement au bras 6a dans un sens maintenant constante la distance.

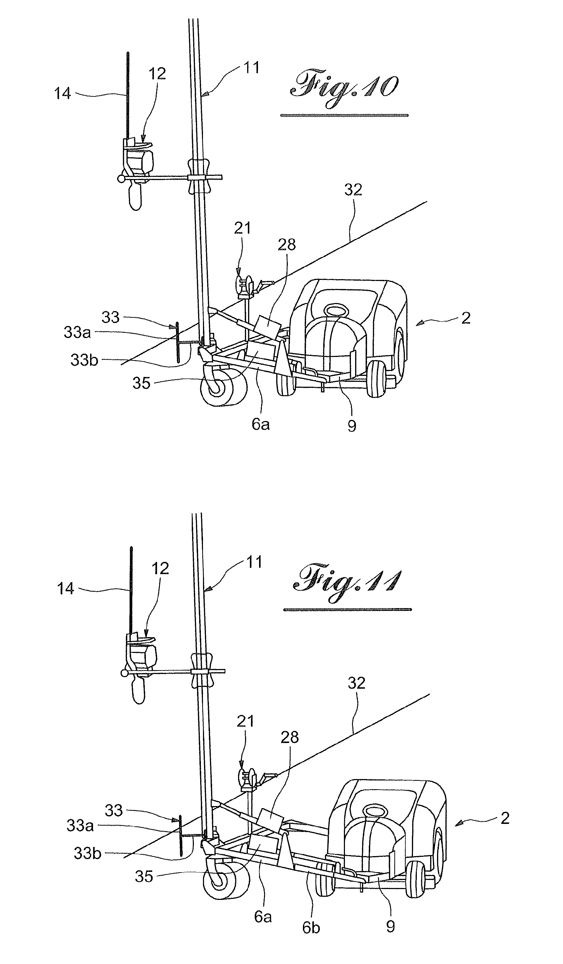

Les figures 10 et 11 montrent respectivement le bras coulissant 6b complètement rétracté dans le bras fixe 6a et le bras 6b totalement sorti du bras fixe 6a, étant bien entendu que le déplacement relatif entre ces deux bras est relativement faible, juste suffisant pour compenser les variations de trajectoire du taille-haie.

Lorsque l'on souhaite tailler en hauteur une haie, la lame de coupe 14 du taille-haie 12 occupe une position horizontale de travail et le palpeur 33 est positionné de façon que sa tige transversale 33a soit horizontalement en contact sur ce câble. En outre, l'actionneur 35 est démonté du bras avant 6 et amoviblement fixé en série sur le câble 23 du treuil, par exemple la partie du câble longeant le mât 11. Ainsi, lors de l'opération de taillage en hauteur d'une haie, toute variation en hauteur de la lame de coupe 14 est détectée par le palpeur 33 qui fournit un signal électrique au circuit d'asservissement permettant à l'actionneur 35 d'agir sur le câble 23 pour déplacer le chariot 17 ou la navette 17, suivant le mode de réalisation du mât 11, dans un sens permettant de maintenir constante la hauteur de la lame de coupe 14 du taille-haie 12.

Bien entendu, le capteur 3 peut être de tout autre type qu'un palpeur. Par exemple, il peut être constitué par un capteur de proximité situé au même niveau que le câble de référence 12 pour le taillage de côté d'une haie ou en aplomb de ce câble pour un taillage en hauteur de la haie.

Les moyens de correction de dévers du cadre 3 relativement à la tondeuse 2 restent actifs pour maintenir le mât à sa position verticale, ce qui permet de garantir à nouveau une position verticale ou horizontale de la lame de coupe 14 suivant une trajectoire rectiligne relativement au câble de référence 32.

Ainsi, avec les dispositifs de contrôle de la trajectoire du taille-haie et de maintien à sa position verticale du mât de support 11 du taille-haie, les variations de cap de la tondeuse 2 n'ont pas d'influence sur la trajectoire du taille-haie.

Le taille-haie 12 monté mobile le long du mât 11 peut être du type à moteur thermique ou à moteur électrique.

Dans le cas du taille-haie à moteur thermique, la mise en route de celui-ci s'effectuera manuellement, avec maintien au ralenti du fonctionnement du moteur en position basse du taille-haie 12 avant de l'élever le long du mât 11 à sa position de travail. Pour commander le taille-haie 12 en mode de coupe de la haie, on prévoit un dispositif permettant au conducteur d'agir à distance directement sur la commande d'accélération du moteur du taille-haie. Ce dispositif peut comporter un contacteur électrique, tel qu'un bouton-poussoir, embarqué sur la tondeuse, commandant électriquement un électroaimant monté sur le taille-haie et agissant directement sur la commande d'accélération du moteur thermique, la liaison entre le contacteur électrique et l'électroaimant s'effectuant par un câble électrique s'étendant le long du mât 11. Pour des raisons de sécurité, le dispositif de commande à distance du moteur thermique du taille-haie est couplé à un dispositif de sécurité embarqué sur la tondeuse 2 et interdisant au conducteur de commander le moteur thermique du taille-haie tant que le conducteur n'est pas assis sur son siège. Ce dispositif de sécurité peut tout simplement comporter un deuxième contacteur électrique relié en série avec le contacteur électrique de commande d'accélération de moteur thermique et disposé sur le siège du conducteur de la tondeuse 2 pour se fermer lorsque le conducteur est assis sur ce siège. Il est également possible de prévoir, embarqué sur la tondeuse 2, un bouton de commande d'arrêt d'urgence du moteur thermique du taille-haie 12.

Lorsque le taille-haie est du type à moteur électrique, un groupe électrogène d'alimentation du taille-haie est installé à l'arrière de la tondeuse 2. L'alimentation du moteur électrique du taille-haie à sa position de travail peut s'effectuer par un contacteur électrique embarqué sur la tondeuse et disposé dans le circuit électrique d'alimentation du taille-haie 12 par le groupe électrogène. Ce dispositif d'alimentation électrique du taille-haie peut être associé au dispositif de sécurité mentionné en liaison avec le taille-haie à moteur thermique de façon à empêcher la mise en route du taille-haie à sa position de travail tant que le conducteur n'est pas assis sur le siège de la tondeuse 2.

Le dispositif formant taille-haie de l'invention est d'une structure extrêmement simple et peu coûteuse, d'autant plus qu'il utilise des tailles-haies à moteur thermique ou électrique disponibles dans le commerce.

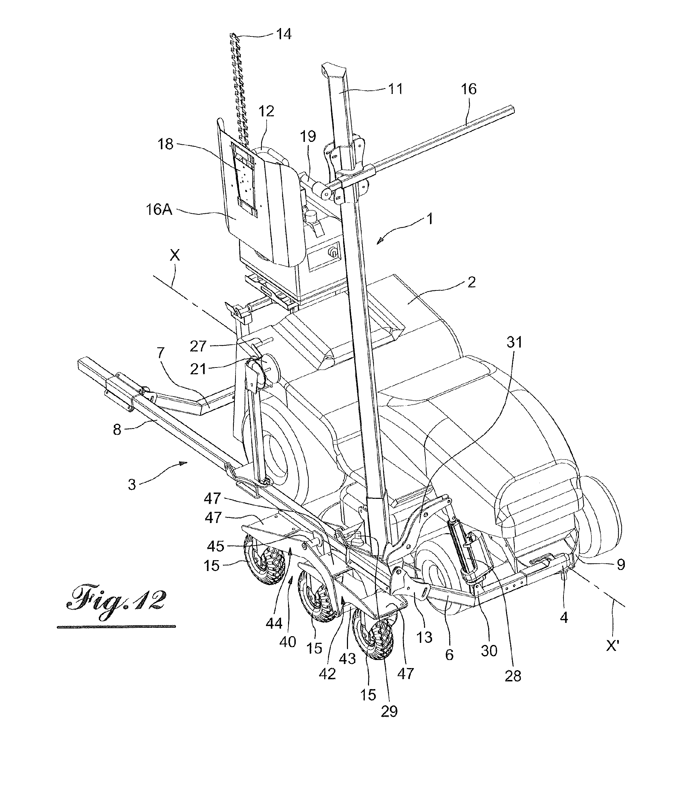

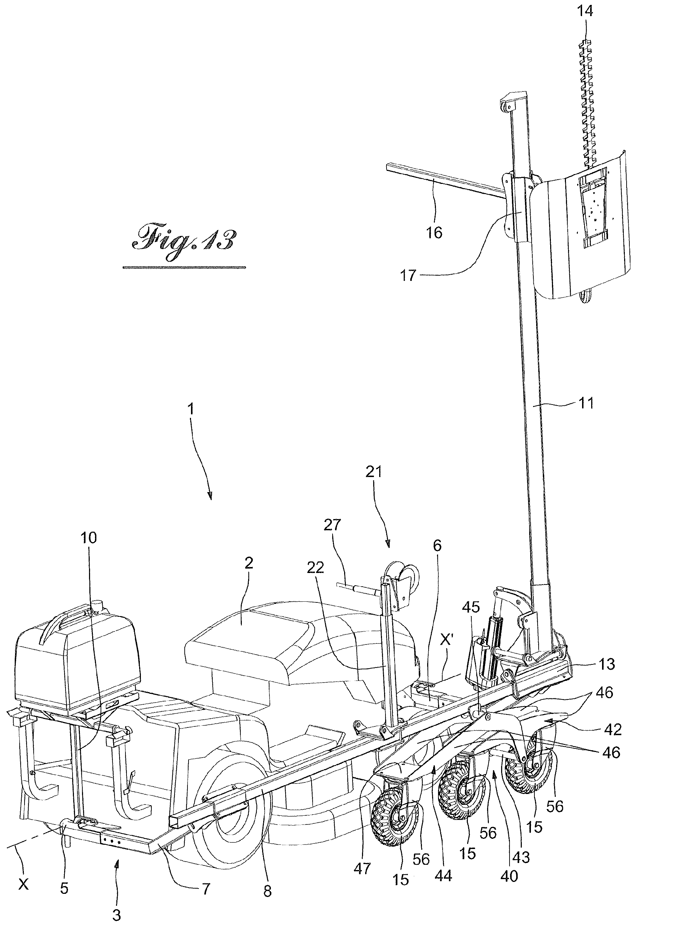

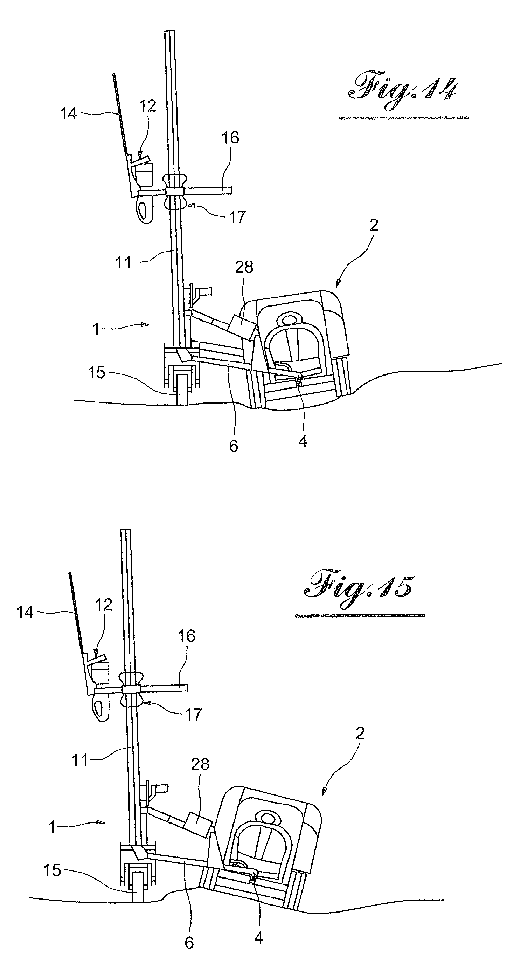

Dans le mode de réalisation du dispositif formant taille haie selon l'invention tel que représenté aux figures 12 à 16, une structure 40, qui sera décrite plus en détail ultérieurement, est interposée entre les roues 15 et le cadre roulant 3 et permet d'adapter la position en hauteur des roues folles 15 pour qu'elles roulent en restant au contact du sol suivant les inégalités du sol, tout en réduisant autant que possible le mouvements verticaux de la barre 8 pour qu'elle reste sensiblement à une distance déterminée par rapport au plan général du sol et ne soit pas soumise à des variations brusques de hauteur lorsque les roues rencontrent des inégalités ponctuelles.

Ainsi, selon ce mode de réalisation, le dispositif formant taille-haie 1 équipant un engin motorisé 2, tel qu'un microtracteur ou une tondeuse autoportée, est **caractérisé en ce qu**'il comprend :
- un cadre roulant 3 latéralement fixé à l'engin motorisé 2 par deux articulations situées respectivement en avant et en arrière de l'engin motorisé suivant l'axe longitudinal X-X' de l'engin motorisé pour permettre un pivotement relatif du cadre roulant et de l'engin motorisé autour de cet axe ;
- un support de taille-haie, solidaire du cadre roulant et pouvant porter à hauteur réglable un taille-haie ;
- une pluralité de roues 15 supportant le poids du cadre roulant en étant montées folles sur une structure interposée entre les roues folles et le cadre roulant de manière à adapter la position en hauteur des roues folles d'une part pour qu'elles roulent en restant au contact du sol même lorsque le sol présente des inégalités et d'autre part pour lisser les débattements verticaux du support de taille-haie résultant desdites inégalités.

La structure 40, interposée entre les roues folles 15 et le cadre roulant 3, peut pivoter par rapport à ce dernier. A cet effet, la structure 40 est un système à balanciers pivotants par rapport au cadre 3 selon que les roues montent ou descendent sur le sol 41.

La structure 40 comporte un balancier terminal 42 ayant une des roues folles 15 à chacune de ses extrémités, la roue avant 15 de ce balancier 42 étant sensiblement à l'aplomb du mât 11 pour éviter que la structure 40 ne dépasse à l'avant du cadre 3, et un balancier intermédiaire 44 qui est interposé entre le cadre roulant 3 et le balancier terminal 42 et qui comporte la roue folle 15 la plus en arrière.

Le balancier intermédiaire 44 est monté pivotant sur la barre 8 du cadre 3 par l'intermédiaire d'un pivot horizontal supérieur 45 et le balancier terminal 42 est monté pivotant sur le balancier intermédiaire 44 par un pivot horizontal inférieur 43.

Chacun des balanciers comporte un corps pourvu d'une part de deux flasques 46 latéraux s'étendant verticalement suivant la direction longitudinale de la barre 8, c'est-à-dire suivant la direction de l'axe X-X' de la tondeuse 2, et d'autre part de plaques horizontales 47 formant entretoises entre les flaques 46. Les flasques sont reliés rigidement d'une part par les plaques 47 et d'autre part par des axes fixes appartenant à aux pivots horizontaux 43 et 45 permettant le pivotement des balanciers.

Chacune des plaques horizontales 47 porte un étrier 56 sur chacun desquels tourne une roue 15. Chaque étrier 56 est monté sur sa plaque 47 en pouvant pivoter librement selon un axe vertical.

Les flasques 46 du balancier intermédiaire 44 sont arqués en forme de boomerang ayant sa concavité vers le bas. La roue folle 15 est à l'extrémité arrière des boomerangs, le pivot supérieur 45 est au sommet des boomerangs et le pivot inférieur 43 est à l'extrémité avant des boomerangs. Dans le mode de réalisation représenté aux figures concernées, la distance séparant les pivots 45 et 43 correspond sensiblement à un tiers de la longueur du balancier intermédiaire 44, le pivot supérieur 45 étant sur la moitié avant de ce dernier. Plus généralement, la distance séparant les pivots 45 et 43 est sensiblement dans un intervalle compris entre un quart et une moitié de la longueur du balancier intermédiaire 44, chaque boomerang pouvant être dissymétrique en ayant sa branche arrière est plus longue que sa branche avant.

Les flasques 46 du balancier terminal 42 sont globalement en T, avec d'une part la barre supérieure du T dont chacune des extrémités est raccordée à l'une des plaques 47 reliées aux roues folles 15 et d'autre part le pied vertical du T dont l'extrémité inférieure est raccordée au pivot inférieur 43.

Avantageusement, le balancier terminal 42 se débat à pivotement entre les branches avant des flasques en boomerang du balancier intermédiaire 44. Ainsi, la structure 40 est relativement compacte en longueur et peut correspondre sensiblement à la moitié avant de la barre 8 du cadre roulant 3, sous la partie la plus lourde ce dernier puisqu'elle porte le mât 11 et le taille-haie 12.

Avantageusement, comme le pivot inférieur 43 de pivotement est entre les roues folles 15 portées par le balancier terminal 42 et peu au dessus des axes de rotation desdites roues 15 dans leur étrier 56, par un effet de balancier lorsque les roues avalent une bosse ou un trou, les débattements verticaux desdites roues 15 entraînent un débattement vertical du pivot inférieur 43 sensiblement de moitié du débattement vertical de chaque roue par rapport au cadre 3. De même, l'effet balancier réduit le débattement vertical du pivot supérieur 45 par rapport à un débattement vertical de la roue arrière portée par l'extrémité arrière du balancier intermédiaire 44.

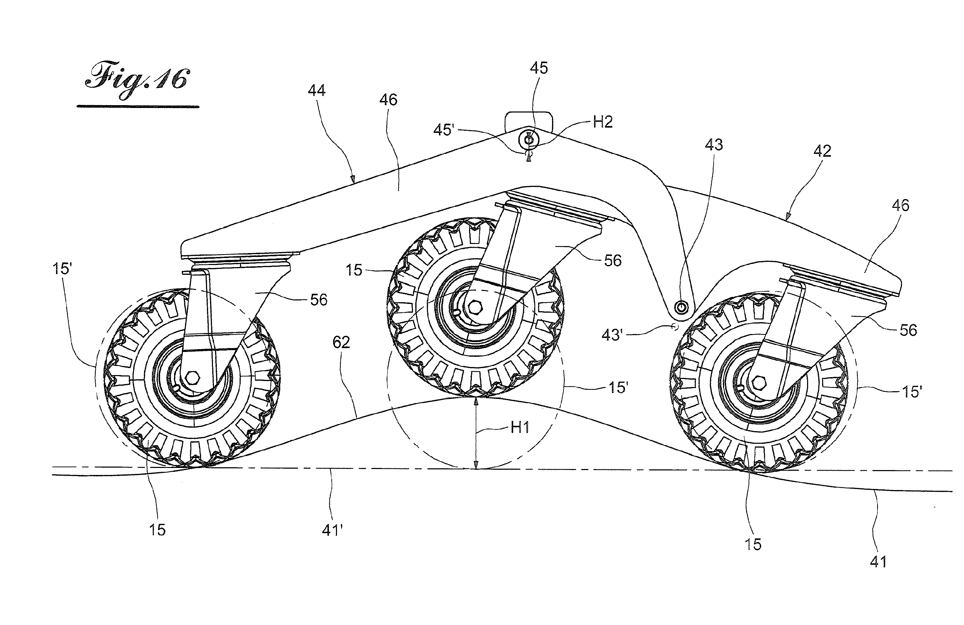

En définitive, lorsque les roues folles 15 au contact du sol 41 avalent un obstacle ou une inégalité 62 de hauteur H1, le débattement vertical H2 du pivot supérieur 45, donc de la barre 8 du cadre 3, correspond à une fraction de la hauteur H1, suivant les proportions choisies pour le diamètre des roues folles 15 et la géométrie choisie pour les balanciers. La hauteur H1 est déterminée par rapport à une surface plane 41' qui, comme représenté en traits mixtes à la figure 16, serait au contact des roues référencées 15' si elles étaient alignées au lieu de passer l'obstacle 62, avec les pivots référencés 45' et 43' à leur position neutre de roulage des roues sur un sol plat.

Typiquement, pour un système à balancier à trois roues, H2 correspond globalement à un tiers de H1.

Selon la configuration de la structure 40 et le nombre de roues choisies, H2 peut être dans un intervalle de un demi à un sixième de H1. Par exemple, dans des modes de réalisations non représentés, le système comporte par exemple un balancier qui est équipé de deux roues et qui est directement monté pivotant sur la barre longitudinale du cadre ou par exemple un balancier intermédiaire pivotant relativement à deux balanciers terminaux chacun équipé de deux roues.

Avantageusement, la structure 40 à balanciers 42 et 44 permet de gommer ou d'atténuer les effets des inégalités du sol au niveau du pivot supérieur 45 et de lisser les débattements verticaux du taille-haie 12 résultant desdites inégalités.

Avantageusement, un patin 16A de protection de taille-haie est monté sous la lame 14 du taille-haie 12 lorsque la lame est dressée verticalement vers le haut, parallèlement à cette dernière et à la plaque de support 18. Le patin 16A présente un profil sensiblement en C au centre duquel est le taille-haie 12, ce profil facilitant un appui stable de l'avant et du milieu du patin sur la haie afin d'éviter des variations parasites de la trajectoire longitudinale et de la trajectoire verticale ou horizontale de la lame 14 lors de la taille d'une haie alors que le terrain est accidenté.

Ce dispositif formant taille-haie présente les avantages suivants :
- il assure une régularité ainsi qu'une qualité de coupe ;
- il peut être utilisé dans toutes les configurations de terrains, plats, en dévers, talus, etc. ;
- il permet des capacités de taille de haie d'une hauteur allant jusqu'à 3 mètres pour une taille latérale de la haie et jusqu'à 2,50 mètres pour une taille de dessus de cette haie ;
- il peut être déporté par rapport à la tondeuse lorsque la haie à tailler est en bordure d'un talus ou d'un léger dévers ;
- il est d'une structure extrêmement compacte et légère, tout en étant très stable grâce à son polygone de sustentation relativement important ;
- il peut être facilement monté à la tondeuse et démonté de celle-ci pour permettre un retour rapide de la tondeuse à sa fonction de tonte.

## Revendications

1. Dispositif formant taille-haie (1) équipant un engin motorisé (2), tel qu'un microtracteur ou une tondeuse autoportée, **caractérisé en ce qu'**il comprend un cadre roulant (3) latéralement fixé à l'engin motorisé (2) par deux articulations (4,5) situées respectivement en avant et en arrière de l'engin motorisé (2) suivant l'axe longitudinal (X-X') de l'engin motorisé (2) pour permettre un pivotement relatif du cadre roulant (3) et de l'engin motorisé (2) autour de cet axe et un mât vertical (11) solidaire du cadre roulant (3) portant à hauteur réglable un taille-haie (12).

2. Dispositif selon la revendication 1, **caractérisé en ce que** l'axe longitudinal de pivotement (X-X') du cadre roulant (3) passe par le centre de gravité de l'engin motorisé (2).

3. Dispositif selon la revendication 1 ou 2,
**caractérisé en ce que** le cadre roulant (3) comprend une roue folle unique (15) supportant le poids du cadre (3) et dont l'axe vertical de pivotement est disposé coaxialement au mât vertical (11).

4. Dispositif selon l'une des revendications précédentes, **caractérisé en ce que** le mât vertical (11) est fixé au cadre roulant (3) en un emplacement déporté et en avant de l'engin motorisé (2) et le taille-haie (12) est fixé au mât vertical (11) en occupant une position sensiblement dans l'axe des roues avant de l'engin motorisé (2).

5. Dispositif selon l'une des revendications précédentes, **caractérisé en ce que** le cadre roulant (3) comprend deux bras rigides (6,7) sensiblement transversaux à l'axe longitudinal de l'engin motorisé (2) et solidaires d'un même côté d'une barre (8) sensiblement parallèle à cet axe longitudinal, les deux bras (6,7) étant amoviblement fixés en avant et en arrière de l'engin motorisé (2) respectivement par deux articulations à rotules (4,5).

6. Dispositif selon la revendication 5, **caractérisé en ce que** les deux articulations à rotules (4,5) comprennent deux boules d'attelage dont l'une est fixée à la partie de châssis avant de l'engin motorisé (2) et l'autre est fixée à la partie arrière de ce châssis par l'intermédiaire d'une structure de support (10) destinée à la fixation d'un bac de ramassage de déchets lorsque l'engin motorisé (2) est une tondeuse autoportée.

7. Dispositif selon l'une des revendications précédentes, **caractérisé en ce que** le mât (11) a son extrémité inférieure fixée pivotante au cadre roulant (3) par une chape (13) d'axe de pivotement sensiblement parallèle à l'axe longitudinal (X-X') de l'engin motorisé (2) et **en ce qu'**un organe (28) de commande de pivotement du mât (11), tel qu'un vérin électrique, est monté entre le mât (11) et le cadre roulant (3) et dont le fonctionnement est asservi à un signal fourni par un capteur de dévers (29) fixé au mât (11) pour maintenir ce dernier à sa position verticale.

8. Dispositif selon l'une des revendications précédentes, **caractérisé en ce que** le taille-haie (12) est amoviblement fixé à l'extrémité d'un bras horizontal (16) à déplacement commandé et guidé le long du mât (11) pour positionner le taille-haie (12) à une hauteur de travail déterminée et peut être réglé à une position angulaire relativement au bras horizontal (16) pour occuper une position de travail choisie entre celle à laquelle la lame de coupe (14) du taille-haie (12) est verticale, et celle où elle est horizontale.

9. Dispositif selon la revendication 8, **caractérisé en ce que** les moyens de commande du déplacement guidé du bras horizontal (16) le long du mât (11) comprennent un treuil mécanique (21) fixé au cadre roulant (3), une navette ou un chariot (17) auquel est fixé le bras horizontal (16), monté coulissant relativement au mât (11) et qui est relié au treuil (21) par un ensemble à câbles (23) et poulies (25,26) pour permettre au treuil (21), actionné par le conducteur de l'engin motorisé (2), de déplacer le chariot (17) à une hauteur déterminée relativement au mât (11).

10. Dispositif selon la revendication 9, **caractérisé en ce que** le mât (11) comprend deux parties (11a, 11b) pouvant coulisser télescopiquement l'une dans l'autre sous la commande du treuil mécanique (21), la navette (17) de support du bras horizontal (16) étant monté à coulissement relativement à la partie interne (11a) du mât télescopique (11).

11. Dispositif selon l'une des revendications 5 à 10, **caractérisé en ce qu'**il comprend des moyens permettant de contrôler la trajectoire du taille-haie (12) suivant un plan vertical pour obtenir un taillage de haie rectiligne et comprenant un câble de référence (32) préalablement tendu suivant la trajectoire à faire suivre au taille-haie (12) suivant le plan vertical, un capteur de position (33) fixé au mât (11) à proximité du câble tendu (32) au même niveau que celui-ci et apte à fournir un signal représentatif de la distance le séparant de ce câble, un actionneur (35), tel qu'un vérin électrique, fixé entre les deux parties (6a, 6b) coulissant télescopiquement l'une dans l'autre du bras avant (6) et un moyen d'asservissement de l'actionneur en fonction du signal fourni par le capteur de position (33) pour déplacer l'une (6b) des parties relativement à l'autre (6a) du bras télescopique avant (6) afin de maintenir constante la distance séparant le mât (11) du câble (32).

12. Dispositif selon l'une des revendications 5 à 10, **caractérisé en ce qu'**il comprend des moyens permettant de contrôler la trajectoire du taille-haie (12) suivant un plan horizontal pour obtenir un taillage de haie rectiligne et comprenant un câble (32) préalablement tendu suivant la trajectoire à faire suivre au taille-haie (12) suivant le plan horizontal, un capteur de position (33) fixé au mât (11) à proximité du câble tendu (32) en aplomb de celui-ci et apte à fournir un signal représentatif de la distance le séparant de ce câble, un actionneur (35), tel qu'un vérin électrique, fixé en série dans le câble (23) de déplacement de la navette ou du chariot (17), et un moyen d'asservissement de l'actionneur en fonction du signal fourni par le capteur de position (33) pour déplacer la navette ou le chariot (17) relativement au mât (11) de façon à maintenir à hauteur constante dans le plan horizontal la lame de coupe (14) du taille-haie (12).

13. Dispositif selon la revendication 11 ou 12, **caractérisé en ce que** le capteur de position (33) est constitué par un ensemble à palpeur contactant le câble de référence (12) et à potentiomètre fournissant un signal électrique d'asservissement de l'actionneur (35).

14. Dispositif selon l'une des revendications précédentes, comprenant une pluralité de roues (15) supportant le poids du cadre roulant (3) en étant montées folles sur une structure (40) interposée entre les roues folles (15) et le cadre roulant (3) de manière à adapter la position en hauteur des roues folles (15) d'une part pour qu'elles roulent en restant au contact du sol (41) même lorsque le sol présente des inégalités (62) et d'autre part pour lisser les débattements verticaux du mât vertical (11) résultant desdites inégalités.

15. Dispositif selon la revendication précédente, **caractérisé en ce que** la structure (40) adaptant la position des roues (15) en hauteur comprend un système de balancier pivotant par rapport au cadre roulant (3) suivant un axe sensiblement horizontal et s'étendant sensiblement perpendiculairement à l'axe longitudinal (X-X').

16. Dispositif selon la revendication précédente, **caractérisé en ce que** le système de balancier comporte au moins un balancier terminal (42) ayant l'une des roues folles (15) à chacune de ses extrémités et ayant un pivot (43) d'axe sensiblement horizontal sensiblement à mi longueur, de manière à autoriser le pivotement du balancier terminal par rapport au cadre roulant.

17. Dispositif selon la revendication précédente, **caractérisé en ce que** le système de balancier comporte un balancier intermédiaire (44) qui est interposé entre le cadre roulant (3) et le balancier terminal (42), qui a un pivot (45) d'axe sensiblement horizontal articulé au cadre roulant (3), ledit pivot (45) étant à une distance de l'une des extrémités du balancier intermédiaire (44) comprise entre un quart et la moitié de la longueur du balancier intermédiaire (44), et auquel le balancier terminal (42) est articulé par pivot (43) à l'une de ses extrémités.

18. Dispositif selon la revendication précédente, **caractérisé en ce que** le balancier intermédiaire (44) est équipé de l'une des roues folles (15) à son extrémité opposée à celle à laquelle le balancier terminal (42) est articulé par pivot (43).

19. Dispositif selon l'une quelconque des revendications 17 à 18, **caractérisé en ce que** le balancier intermédiaire (44) comporte un corps arqué vers le bas et ayant son pivot (45) d'articulation au cadre (3) à son extrémité supérieure.

20. Dispositif selon l'une quelconque des revendications 17 à 19, **caractérisé en ce que** le balancier terminal (42) comporte un corps globalement en T ayant l'une des roues (15) montées folles à chacune de ses extrémités supérieures et dont l'extrémité inférieure est articulée par pivot (43) au balancier intermédiaire (44).

21. Dispositif selon l'une quelconque des revendications 17 à 20, **caractérisé en ce que** chacun des balanciers (42, 44) comporte deux flasques (46) reliés entre eux et s'étendant sensiblement verticalement et parallèlement à l'axe longitudinal (X-X'), le balancier terminal (42) étant monté articulé par pivot (43) entre les flasques (46) du balancier intermédiaire (44).

22. Dispositif selon l'une quelconque des revendications précédentes, **caractérisé en ce qu'**un patin (16A) de protection de taille-haie est relié au mât vertical (11) pour être situé sous la lame (14) du taille-haie (12) lorsque la lame est dressée verticalement vers le haut, le patin (16A) présentant un profil sensiblement en C qui permet d'une part de recevoir en son centre le taille-haie (12) pour le protéger et d'autre part de stabiliser l'appui du patin (16A) sur la haie à tailler.
